# EUROPÄISCHE PATENTSCHRIFT

(11) **EP 4 062 529 B1**
(45) Veröffentlichungstag und Bekanntmachung des Hinweises auf die Patenterteilung: **08.05.2024**
(21) Anmeldenummer: 20848693.6
(22) Anmeldetag: 20.11.2020
(51) Int. Cl.: H02S 20/25, H02S 30/20

(54) **VERFAHRBARE SCHINDELANORDNUNG AUS STREIFENRECHTECKMODULEN MIT EINER BELEGUNG VON KRISTALLINEN SOWIE DÜNNSCHICHT-SOLARZELLEN**
MOVABLE SHINGLE ARRANGEMENT OF RECTANGULAR STRIP MODULES COMPRISING A COVERING OF CRYSTALLINE AND THIN-LAYER SOLAR CELLS
ENSEMBLE BARDEAU DÉPLAÇABLE CONSTITUÉ DE MODULES RECTANGULAIRES EN BANDE RECOUVERTS DE CELLULES SOLAIRES CRISTALLINES ET EN COUCHES MINCES

(30) Priorität: 21.11.2019 DE 102019131541
(43) Veröffentlichungstag der Anmeldung: 28.09.2022
(73) Patentinhaber: Rösener, Thomas, 01279 Dresden (DE)
(72) Erfinder: Rösener, Thomas, 01279 Dresden (DE)
(74) Vertreter: Drechsler, Gottfried
(86) Internationale Anmeldenummer: PCT/DE2020/100987
(87) Internationale Veröffentlichungsnummer: WO 2021/098918

(56) Entgegenhaltungen:
- CN-A- 107 769 729
- CN-A- 110 460 297
- JP-A- S6 034 078
- US-A- 4 616 451
- US-A1- 2005 257 823
- US-A1- 2019 181 796

## Beschreibung

Die Erfindung betrifft eine verfahrbare Schindelanordnung aus Streifenrechteckmodulen mit einer Belegung von in Reihe oder parallel geschalteten kristallinen sowie Dünnschicht-Solarzellen auf wahlweise verschiedenen Trägermaterialien, wobei entlang von mindestens zwei Außenkanten unter dem Solarmodul Stützstrukturen zum Halten und Verschieben in einem darunter angeordneten ausfahrbaren und/oder ausklappbaren Schienensystem angeordnet sind, sodass die Schindelanordnung als Vordach ausfaltbar, ausfahrbar oder aufstellbar anordenbar ist.

Aus der DE 10 2012 024 135 A1 ist eine Solarmarkise für Wohnwagen bzw. Wohnmobile bekannt, welche aus mindestens einem starren oder flexiblen Solarmodul mit einer Aufklapp- und Zusammenklappmechanik besteht und welche mit einer Ein- und Ausfahrmechanik und mit einer Aufstell- und Ablegemechanik versehen ist. Die Markise ist mit einer festen Fixierung am Dach oder der Wand eines Fahrzeuges befestigt und besitzt eine Gesamtmechanik zum Aufklappen und Zusammenlegen. Diese Solarmarkise soll elektrische Energie produzieren, schattet die Sonne ab, schirmt den Regen ab und ist dauerhaft an einem Fahrzeug befestigt. Sie kann zum Transport zusammengeklappt und transportiert werden und ist des Weiteren auch zur Anbringung an Wänden oder Dächern geeignet, wobei diese Art einer Solarmarkise in der Handhabung relativ unflexibel ist. Die einzelnen Solarmodule sind über eine aufwendige Scharnierkonstruktion untereinander befestigt.

In der WO 9221152 A1 ist eine Solaranordnung zur Verwendung in einer Reihe von Solarplatten gezeigt, welche auf einem Dachunterbau befestigbar sind, wobei jede Platte mit einer benachbarten Seite der nächsten Solarplatten über eine überstehende Nahtabdeckung verbunden ist. Dabei ist ein massiver breiter Grundträger angeordnet, welcher eine vordere Fläche aufweist und eine rückwärtige Fläche zum Anbringen auf dem Dachunterbau. Es sind an den längserstreckenden Seitenkanten aufragende Falze angeordnet, welche mit den seitlichen Solarplatten fest verschraubt sind, sodass ein Zusammenklappen oder Falten nicht möglich ist. An der Unterkante sind jeweils sich über die gesamte Breite erstreckende überstehende Lippen angeordnet, sodass sich die einzelnen Solarplatten untereinander schindelartig überlappen und damit witterungsdicht verbunden sind.

In der EP 2 020 467 A1 ist eine Outdoor-Markise mit Paneelen zur Nutzung von Sonnenenergie beschrieben, bei der eine feststehende Tragstruktur für mehrere Querträger angeordnet ist, die sich längs entlang von Führungsschienen bewegen können, die innerhalb einer feststehenden Stützstruktur ausgebildet sind, um die Markise öffnen und schließen zu können. Dabei ist jeder Querträger starr mit der Unterseite eines Baldachins so verbunden, wobei der Baldachin eine Vielzahl von einzelnen Querteilen aufweist, wobei jeder der Querteile durch ein Paar der aufeinanderfolgenden Querträger (3) begrenzt ist. Auf dem zusammenfaltbaren Baldachin sind eine Vielzahl von Solarpaneelen verteilt angeordnet. Diese Solarpaneele, welche gespannt werden können, werden dem Sonnenlicht ausgesetzt, um die Strahlung aufzunehmen und Energie mit dieser Faltmarkise umzuwandeln. Neben der Energiegewinnung schützt diese Faltmarkise vor der direkten Sonneneinstrahlung und schützt vor Witterungseinflüssen wie insbesondere Regen. Diese Art einer Markise ist aber nur in einer bestimmten Dachneigung anordenbar, sodass kein optimaler Winkel gegenüber den auftreffenden Sonnenstrahlen einstellbar ist, wodurch die Energieausbeute nicht allzu hoch ist und erheblich im Tagesverlauf schwankt.

US4616451A beschreibt eine Verfahrbare Schindelanordnung aus Solarmodulen.

Aufgabe der Erfindung ist es, eine neuartige Verbindungsstruktur für eine verfahrbare Schindelanordnung aus Streifenrechteckmodulen mit einer Belegung von kristallinen sowie Dünnschicht-Solarzellen auf wahlweise verschiedenen Trägermaterialien zu schaffen, wobei entlang von mindestens zwei Außenkanten unter dem Solarmodul Stützstrukturen zum Halten und Verschieben an einem angeordneten ausfahrbaren oder ausklappbaren Schienensystem angeordnet sind, wobei diese Schindelanordnung eine hohe Energieausbeute ermöglicht, eine teilweise oder vollständige Verschattungsfläche garantiert, einen Witterungsschutz bietet, wenig Platzbedarf benötigt, leicht bauend und einfach bedienbar ausgebildet ist und eine lange Lebensdauer besitzt.

Die Aufgabe wird erfindungsgemäß mit den Merkmalen des Oberbegriffs und des kennzeichnenden Teils des ersten Patentanspruches oder dreizehnten Patentanspruches gelöst. Weitere vorteilhafte Ausgestaltungen sind in den abhängigen rückbezüglichen Unteransprüchen beschrieben. Die erfindungsgemäße verfahrbaren Schindelanordnung 1 besteht aus an sich bekannten miteinander gekoppelten Streifenrechteckmodulen 2, welche mit kristallinen sowie Dünnschicht-Solarzellen 3 belegt sind und sich jeweils überlappen.

Geeignete Trägermaterialien für die Dünnschicht Solarzellen 3 können üblicherweise Dünn-Glas, GFK, CFK oder Kunststoffe sein. Entlang von mindestens zwei Außenkanten 18 ist ein aus- und einziehbares oder aus- und einfahrbares Schienensystem 6, 21 angeordnet. Unter dem Schienensystem 6, 21, welches bevorzugt als geteiltes gegeneinander verschiebbares Doppelschienensystem aus mindestens zwei Doppelschienen 11 ausgeführt ist und in dem jedes Streifenrechteckmodul in beiden Schienen 11.1 und 11.2 gelagert und geführt ist und damit aufrichtbar ist, sind zu dessen Führung und Halterung geeignete Stützstrukturen ausgebildet. Auf den Streifenrechteckmodulen 2 sind eine Reihe, zwei Reihen oder mehrere Reihen von nebeneinander angeordneten kristallinen oder Dünnschicht-Solarzellen 3 so untereinander verschalteten angeordnet, dass eine möglichst maximale Flächenbelegung mit aktivem photovoltaischen Solarzellenmaterial erfolgt. Üblicherweise korrespondieren die Abmessungen der Streifenrechteckmodule 2 mit den handelsüblich abgestuften Größen der einzelnen Dünnschicht Solarzellen 3 je nach Baugröße der Schindelanordnung. Dabei sind Streifenrechteckmodule 2 so ausgebildet, dass diese zwei oder bei Bedarf auch entsprechend mehrere Streifenrechteckmodule 2 in ausgezogenen Zustand sich schindelartig noch gering überlappen um eine geschlossene Dachfläche, eine Regenwasserdichtheit mit einer ausreichenden mechanischen Stabilität gewährleisten zu können. An jedem Streifenrechteckmodul 2 in dem jeweils eine Bypass-Diode integriert ist, sind außen je nach Ausführung verschiedene Kontakte ausgebildet, wobei jedes Streifenrechteckmodul 2 einzeln kontaktiert und verschaltet ist. Die Kontakte sind direkt entweder an einer der kurzen Seiten 20 oder auch beidseitig seitlich im oder auf dem Streifenrechteckmodul 2 oder in einem der Schienen angeordnet. Entlang mindestens einer langen Seite 19 des Streifenrechteckmoduls 2 ist eine definierte Lochstruktur aus Vertiefungen oder durchgehenden Öffnungen 9 so angeordnet, dass in diese Lochstruktur Erhebungen, Kugeln oder Stifte 10 eines nächsten angeordneten Streifenrechteckmoduls 2 (beispielsweise kombiniert Noppen/Spikes oder eine Einrastkugel/Einrastaussparungen) eingreifen, sodass eine mechanisch stabile Verbindung entsteht. Die Streifenrechteckmodule 2 sind untereinander über einen Seilzug oder ein Schienensystem 5 so gekoppelt, dass diese von Hand oder automatisch ausgezogen bzw. eingezogen werden können. In ausgezogenem Zustand bilden die einzelnen Streifenrechteckmodule 2 ein durchgehendes sich überdeckendes Schindeldach. In eingezogenem bzw. eingefahrenen Zustand liegen die längs oder quer nebeneinander angeordneten Streifenrechteckmodule 2 in einem Stapel übereinander oder nebeneinander in einem Schindelkasten 23, sodass diese einen minimalen Platzbedarf besitzen und ohne Probleme als eine Art verschnürtes Paket gegen verrutschen gesichert werden können bzw. stabil befestigt sind. Die Streifenrechteckmodule 2 können entweder mittels des Seilzuges oder auch über ein geeignetes innen liegendes Schienensystem 5 nicht nur in die vollausgezogene Position verfahren werden, sondern sind auch zwecks optimaler Nutzung der Sonneneinstrahlen beispielsweise nach oben beispielsweise mittels eines Doppelschienensystems schräg aufstellbar, das heißt, dass Schindeldach ist teilweise geöffnet. Je nach technischer Ausführung der Verschiebemechanik kann die Aufstellbarkeit entweder von Hand oder auch automatisch, wie insbesondere sensorgesteuert geregelt werden. Dadurch erfolgt ein optimales Aufstellen oder Ausrichten auf die jeweilige Höhe des Sonnenstandes. Es ist auch möglich, zum Beispiel, wenn die Schindelanordnung 1 auf einer Seite über eine Gelenkkonstruktion 12 an eine Fahrzeug- oder Wandfläche 17 angekoppelt ist, dass die gesamte Schindelanordnung 1 im Tagesverlauf auf den Sonnenstand seitlich verschwenkt und ausgerichtet werden kann, um eine optimale Energieausbeute zu ermöglichen.

Wahlweise kann die verfahrbare Schindelanordnung 1 aus Streifenrechteckmodulen 2 mit einer Belegung von kristallinen sowie Dünnschicht-Solarzellen 3 aus Streifenrechteckmodulen als einflächiges, zweiflächiges oder mehrflächiges Schindeldach ausgebildet sein, d. h. indem eine oder mehrere Zwischenschienen 21 zur Unterteilung und aus Stabilitätsgründen angeordnet werden. Dadurch lässt sich die Größe der überdeckten Fläche den jeweils geforderten Bedürfnissen anpassen.

Von Vorteil ist insbesondere für eine hohe Energieausbeute, wenn die Schindelanordnung 1 mit einer Belegung von kristallinen sowie Dünnschicht-Solarzellen 3 in Abhängigkeit vom Winkel der Sonneneinstrahlung je nach Ausführungsvariante entweder von Hand oder auch automatisch über eine geeignete Stützteleskopkonstruktion 15 aufstellbar und ausrichtbar ausgebildet ist. Die Energieausbeute ist bekanntlich am höchsten, wenn die Sonnenstrahlen nahezu senkrecht auf die kristallinen sowie Dünnschicht-Solarzellen 3 auftreffen.

Gleichfalls kann die verfahrbare Schindelanordnung 1 aus Streifenrechteckmodulen 2 mit einer Belegung von kristallinen sowie Dünnschicht-Solarzellen 3 in einer besonderen Ausführungsvariante so von Hand oder automatisch aufstellbar ausgebildet sein, dass die die Schindelanordnung 1 als gesamtes geschlossenes Schindeldach in Abhängigkeit vom Winkel der Sonneneinstrahlung höhenausricht- und aufstellbar ist, das bedeutet, es wird entsprechend als geschlossene Dachkonstruktion als Ganzes schräg gestellt bzw. nach oben aufgerichtet oder nach unten - je nach Sonnenstand - flacher gestellt, um eine optimale Energieausbeute zu ermöglichen.

Im Prinzip ist es auch möglich, dass bei der verfahrbaren Schindelanordnung 1 die einzelnen Streifenrechteckmodule 2 nur teilweise mit kristallinen sowie Dünnschicht-Solarzellen 3 belegt sind oder das nur jedes zweite Streifenrechteckmodul 2 bestückt ist. Dies verringert zwar die Energieausbeute entsprechend, aber unter der Schindelanordnung verbessern sich die Lichtverhältnisse erheblich, die Beschattung wird weniger, wobei trotzdem bei guten Lichtverhältnissen auch die Witterungsdichtheit gewährleistet werden kann.

Aus Sicherheitsgründen ist es sinnvoll, wenn die verfahrbare Schindelanordnung 1 aus Streifenrechteckmodulen 2 mit einer Belegung von kristallinen sowie Dünnschicht-Solarzellen 3 mit einem oder mehreren Sensoren ausgebildet ist, d. h., dass die Schindelanordnung 1 dann sensorgesteuert überwacht wird. Vorteilhaft ist es, wenn beispielsweise mindestens ein Regensensor angeordnet ist, sodass bei aufgestellten Streifenrechteckmodulen 2, d. h., bei teilweise geöffnetem Schindeldach, die Streifenrechteckmodule 2 flach gelegt werden und eine Regendichtheit hergestellt werden kann. Zudem kann auch mindestens ein weiterer Sensor angeordnet werden, der die angreifenden Windlasten bei Sturm überwacht und rechtzeitig warnt, um beispielsweise eine Zerstörung der gesamten Schindelanordnung 1 in aufgebautem Zustand zu verhindern. So ist es möglich, bei entsprechender motorischer Betätigung über Seilzug oder geeignete motorisch betriebene Mechanik oder ein inneres Schienensystem 5 das Schindeldach bei Gefahr sensorausgelöst automatisch einzufahren oder einzufalten um Schäden an der Schindeldachanordnung zuverlässig vermeiden zu können.

Die Gebrauchseigenschaften der verfahrbaren Schindelanordnung 1 aus Streifenrechteckmodulen 2 mit einer Belegung von kristallinen sowie Dünnschicht-Solarzellen 3, d. h., des erfindungsgemäßen Schindeldaches lassen sich weiter steigern, wenn unter dem Schindeldach zusätzlich eine Beleuchtung, wie beispielsweise eine Beleuchtung mittels energiesparenden LED-Elementen angeordnet ist.

Denkbar ist es außerdem, wenn bei einer Anordnung der verfahrbaren Schindelanordnung 1 aus Streifenrechteckmodulen 2 die auszieh- bzw. ausfahrbare Schindelanordnung 1 beidseitig an den Längsseiten eines Fahrzeuges oder auch dreiseitig, d. h. an den beiden Längsseiten und des Weiteren noch am Heck des Fahrzeuges angeordnet ist. Es ist dabei wahlweise einzeln nach einer Seite, nach zwei Seiten oder nach allen drei Seiten ausfahrbar.

Von Vorteil kann es auch sein, wenn die verfahrbare Schindelanordnung 1 aus Streifenrechteckmodulen 2 nur einseitig mit einer Gelenkkonstruktion 12 fest arretierbar an einem Fahrzeug, oder beispielsweise an einer Mauer oder einer Gebäudewand oder Wandfläche 17 angeordnet ist, sodass die Schindelanordnung jeweils um die Gelenkkonstruktion 12 unter Einbeziehung der Stützkonstruktion um einen Winkel bis zu 90° verschwenkt werden kann. Dann ist beispielsweise ohne ein Umparken des Fahrzeuges bei Fahrzeuganordnung eine optimale Ausrichtung je nach Sonnenstand möglich. Auch bei Anordnung an einer festen Hauswand lässt sich durch Verschwenken eine ideale Ausrichtung auf diese einfache Art und Weise erzielen. Voraussetzung ist, dass ausreichend Platz für die dann mit dem Schindeldach überdeckte Fläche zur Verfügung steht.

Üblicherweise ist jedes Streifenrechteckmodul 2 bei dieser verfahrbare Schindelanordnung 1 mit einer Belegung von kristallinen sowie Dünnschicht-Solarzellen 3 mit einer Bypass-Diode einzeln verschaltet und über geeignete Sammelschienen oder Verbindungsleitungen mit einem zwischengeordneten Wechselrichter mit einer Energiesammeleinheit verbunden.

Die Kontaktierung der Streiferechteckmodule 1 bei der erfindungsgemäßen verfahrbaren Schindelanordnung 1 zur Ableitung des von den kristallinen sowie Dünnschicht-Solarzellen 3 in den einzelnen Streifenrechteckmodulen 2 erzeugten Stroms erfolgt je nach Ausführungsform bevorzugt über in den Längsschienen 6 angeordnete Kontakte, wie beispielsweise Federkontakte oder über in den Längsschienen 6 angeordnete Pinkontakte oder über einzelne Steckverbindungen oder über Schleifkontakte, welche mit Sammelschienen oder über Verbindungsleitungen mit der Energiesammeleinheit oder mit geeigneten Verbrauchern verbunden sind.

Um einen besseren Witterungsschutz bzw. auch einen zusätzlichen Sichtschutz von einer zwei oder allen drei Seiten zu ermöglichen, können bei der verfahrbaren Schindelanordnung 1 aus Streifenrechteckmodulen 2 mit einer Belegung von kristallinen Dünnschicht-Solarzellen 3 an oder unter den seitlichen Außenkanten 18 und der gegebenenfalls angeordneten Frontschiene 7 und die Stützkonstruktion teilweise oder vollständig umhüllend, d. h., gegebenenfalls auch einzeln für sich zu öffnen, zusätzliche Zeltplanen zum seitlichen oder allseitigen Witterungsschutz angeordnet sein.

Die verfahrbare Schindelanordnung 1 aus Streifenrechteckmodulen 2 mit einer Belegung von kristallinen sowie Dünnschicht-Solarzellen 3 ermöglicht, unabhängig von den wahlweise verschiedenen Trägermaterialien, auf denen die kristallinen sowie Dünnschicht-Solarzellen 3 aufgebracht sein können, eine hohe Energieausbeute, wobei dieses universelle Schindeldach konstruktiv einfach ausgeführt ist und sehr filigran und leicht bauend ausgeführt werden kann. Dadurch ist problemlos ein Anbau an verschieden großen Fahrzeugen oder beliebige Wandkonstruktionen möglich und es ist zudem eine große nutzbare aktive, Strom erzeugende Solarfläche realisierbar. Sie garantiert je nach Ausführungsform eine teilweise oder vollständige Verschattungsfläche, bietet einen ausreichenden Witterungsschutz, benötigt wenig Platz und ist einfach auf- und abbaubar. Die gewonnene Energie kann in einem geeigneten Energiesammelsystem, wie auch beispielsweise in einer entsprechend dimensionierten Fahrzeugbatterie gespeichert werden.

In einer ganz einfachen Ausführung der Erfindung kann die erfindungsgemäße verfahrbare Schindelanordnung als eine zusammensteckbare Schindelanordnung 1 aus einzelnen einfach von Hand montierbaren Streifenrechteckmodulen 2 mit einer Belegung von kristallinen sowie Dünnschicht-Solarzellen 3 auf wahlweise verschiedenen Trägermaterialien bestehen. Dabei sind entlang von mindestens zwei Außenkanten 18 unter den Streifenrechteckmodulen 2 geeignete Stützstrukturen zum Halten und Verschieben in einem, bei Bedarf darunter angeordneten, ausfahrbaren oder ausklappbaren Teleskopstützensystem 5 angeordnet. Es können eine Reihe, zwei Reihen oder mehrere Reihen von nebeneinander angeordneten kristallinen sowie Dünnschicht-Solarzellen 3 untereinander verschalteten und zu einem Streifenrechteckmodul 2 angeordnet sein. Die zwei oder mehrere Streifenrechteckmodule 2 werden so zusammengesteckt oder geklickt, dass diese sich in ausgefahrenen, d.h. hier montierten Zustand schindelartig überlappen. An jedem Streifenrechteckmodul 2 sind außen an der kurzen Seite 20 Kontakte ausgebildet, wobei die Kontakte 11 an der kurzen Seite 20 direkt seitlich im oder auf dem Streifenrechteckmodul 2 oder im inneren Schienensystem 5 angeordnet sind. Dabei ist jedes Streifenrechteckmodul 2 einzeln kontaktiert und verschaltet. Entlang einer langen Seite 19 des Streifenrechteckmoduls 2 ist eine definierte Lochstruktur aus Vertiefungen oder durchgehenden Öffnungen 9 angeordnet, wobei in die Vertiefungen oder Öffnungen 9 der Lochstruktur Erhebungen oder Stifte 10 des jeweils nächsten angeordneten Streifenrechteckmoduls 2 (beispielsweise mittels Noppen/Spikes oder einer Druckknopfverbindung) eingreifen. Die Streifenrechteckmodule 2 sind untereinander manuell über die Vertiefungen oder durchgehenden Öffnungen 9 und die korrespondierenden Erhebungen oder Stifte 10 zu einem Schindeldach zusammengesteckt, fixiert und somit mechanisch verbunden. Die einzelnen zusammenmontierten Streifenrechteckmodule 2 bilden ein geschlossenes Schindeldach und die Streifenrechteckmodule 2 sind über gesonderte flexible außen isolierte Kupferverbinder, in der Regel flexible Flachverbinder, über eine oder zwei seitlich angeordnete Sammelschienen oder Kabel verbunden und mit einer Energiesammeleinheit oder angeschlossenen Verbrauchern über eine elektrische Schaltzentrale geschaltet. Je nach Ausführung kann dieser manuell montierbare Bausatz am Einsatzort schnell zusammenmontiert und mittels einer gesonderten Trägerkonstruktion an verschiedenste Fahrzeuge, Gestelle, Bauwerke, Wände, Balkone usw. befestigt werden. Diese Schindelanordnung 1 ist an eine Energiesammeleinheit angeschlossen, die auch die weitere erforderliche Schaltungstechnik, wie beispielsweise einen Wechselrichter oder eine Steuerungselektronik enthält.

Die Erfindung soll nachstehend in einem Ausführungsbeispiel anhand der Figuren 1 bis 10 in mehreren Varianten näher beschrieben werden.
- Fig. 1: zeigt ein Fahrzeug, mit links und rechts angeordneten Schindelanordnungen 1
- Fig. 2: zeigt eine dreiflächige Schindelanordnung 1 als Draufsicht
- Fig. 3: zeigt eine aufgeständerte dreiflächige Schindelanordnung 1 in freier Aufstellung
- Fig. 4: zeigt schematisch eine Seitenansicht und Vorderansicht an einer Wand
- Fig. 5: zeigt eine einflächige Schindelanordnung 1 mit zwei Reihen von nebeneinander angeordneten und untereinander verschaltenen kristallinen sowie Dünnschicht Solarzellen 3 mit jeweils 8 Dünnschicht-Solarzellen 3 pro Reihe während eines Ausfahrvorganges
- Fig. 6: zeigt eine einflächige Schindelanordnung 1 mit zwei Reihen von nebeneinander angeordneten und untereinander verschalteten kristallinen sowie Dünnschicht-Solarzellen 3 in flacher Schrägstellung der Streifenrechteckmodule 2, um einen optimalen Strahlungseinfall zu ermöglichen
- Fig. 7: zeigt eine zweiflächige Schindelanordnung 1 mit einer Reihe von nebeneinander angeordneten und untereinander verschaltenen kristallinen sowie Dünnschicht Solarzellen 3 in steiler Schrägstellung der Streifenrechteckmodule 2, um einen optimalen Strahlungseinfall zu ermöglichen
- Fig. 8: zeigt eine zweiflächige Ausführung von um mehr als 90 Grad verstellbaren, d. h. in entgegengesetzte Richtungen aufstellbare Streifenrechteckmodule 2 mit jeweils 8 in einer Reihe angeordneten kristallinen sowie Dünnschicht-Solarzellen 3 pro Streifenrechteckmodul 2
- Fig. 9: zeigt eine ganz einfache manuell zusammenbaubare Ausführung einer Schindelanordnung 1 ohne einen Rahmen und ohne ein Gestell zum Aufstellen oder Ausrichten und ohne Zubehör
- Fig. 10: zeigt eine aufgeständerte dreiflächige Schindelanordnung 1 montiert an eine Wandfläche 17 mit einer einfachen Gelenkkonstruktion (hier mit einer Scharnierausführung zum Verschwenken um bis zu 90 Grad nach links
- Fig. 11: zeigt schematisch eine Doppelschiene 11 zum Aufstellen der daran befestigten sechs Streifenrechteckmodule 2

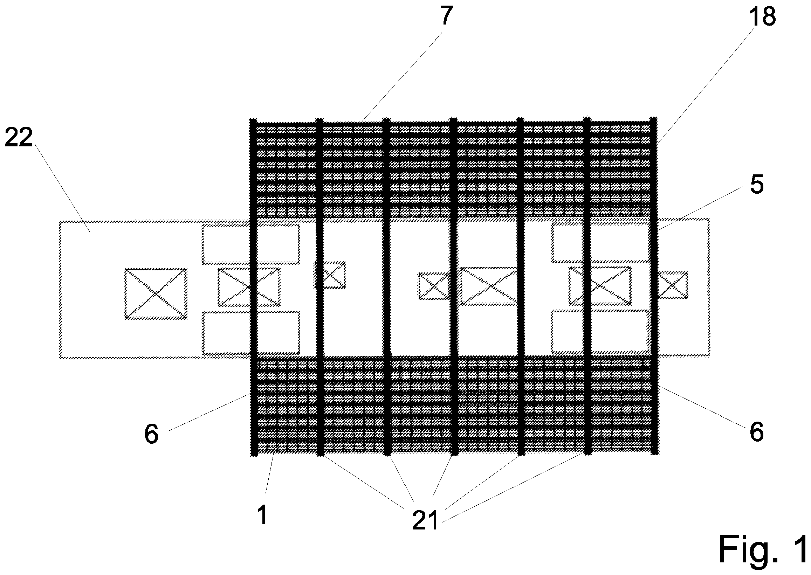

In der **Fig. 1** ist in einer möglichen Ausführungsvariante ein Fahrzeug 22 mit links und rechts angeordneten ausgefahrenen Schindelanordnungen 1 gezeigt, wo über dem Dach eines Fahrzeuges 22, wie beispielsweise eines Caravans, ein durchgehendes auszieh- bzw. ausfahrbares profiliertes System aus teleskopierbaren Schienen angeordnet ist. Das Schienensystem besteht hier aus zwei teleskopierbaren/einziehbaren Längsschienen 6 und fünf teleskopierbaren/einziehbaren Zwischenschienen 21, in deren Inneren ein Schienensystem 5 zur Führung und Halterung von Streifenrechteckmodulen 2 angeordnet ist und welche sich auch über die gesamte Fahrzeugbreite über dem Dach des Fahrzeugs erstrecken. Diese sind hier in dieser Figur 1 in ausgefahrenem Zustand gezeigt. Die inneren Schienen sind als Zwischenschienen 21 ausgeführt, d. h., sie besitzen zwei beidseitige Führungen für die Befestigung und Führung der einzelnen schindelartig sich überlappenden Streifenrechteckmodule 2. In den Zwischenschienen 21 sind auch einseitig oder je nach Ausführungsvariante beidseitig Sammelschienen zur Stromleitung angeordnet (nicht gezeichnet). Die Zwischenschienen 21 sind in der Regel wannenförmig ausgebildet und nach unten wasserdicht ausgeführt, sodass diese auch zur Wasserabführung dienen. Es ist aber je nach Ausführung auch eine gesonderte dichtende Abdeckung nach oben ausbildbar.

Auf jeder Fahrzeugseite ist eine sechsflächige Schindelanordnung aufgefaltet bzw. ausgefahren. In eingefaltetem bzw. eingefahrenem Zustand sind die Längsschienen 6 und Zwischenschienen 21 so lang ausgebildet, dass diese die Fahrzeugbreite nicht überragen können. Sind die Längsschienen 6 und die Zwischenschienen 21 mehrfach telskopierbar, ist es auch möglich, die zusammengefalteten Schindelanordnungen genau mittig an der Längssymmetrieachse des Fahrzeuges zu lagern. In der Regel werden sie aber jeweils im Randbereich des Fahrzeugdaches gelagert, gesichert und mitgeführt. Auf dem Fahrzeugdach sind Oberlichter dargestellt (diese sind nicht benummert). Das Schienensystem ist über die Fahrzeugbreite mittig montiert, somit ist der Schwerpunkt beim Fahren ausgeglichen, da eine gleichmäßige Lastenverteilung entsteht. Durch die Unterteilung in ein mehrteiliges Schienensystem besteht die Möglichkeit einer flexiblen Ausfahrbarkeit. Das Schindeldach ist daher auf jeder Fahrzeugseite separat ausfahrbar.

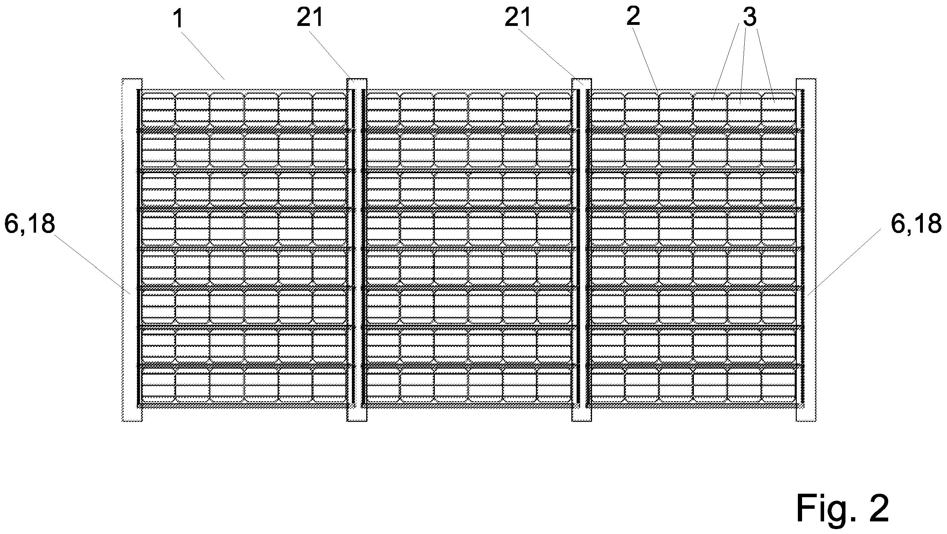

Die **Fig. 2** zeigt als ein Beispiel eine dreiflächige Schindelanordnung 1 als Draufsicht, des Gleichen sind auch andere mehrflächige Schindelanordnungen ausführbar. Pro Schindelfläche überlappen sich 8 Streifenrechteckmodule 2 mit jeweils 6 kristallinen sowie Dünnschicht-Solarzellen 3. Die beiden Mittelschienen 21 sind wannenförmig ausgebildet und dienen gleichzeitig der Wasserabführung bei Regen. Die Kontaktierung in den Mittelschienen 21 und die Stromabführung mittels geeigneter Sammelschienen oder Sammelleiter erfolgt dabei in einem gesonderten, gegen eindringende Feuchtigkeit isolierten, Kanal. Die beiden Längsschienen 6 an den Außenkannten 18 sind von der Seite geeignet verkleidet.

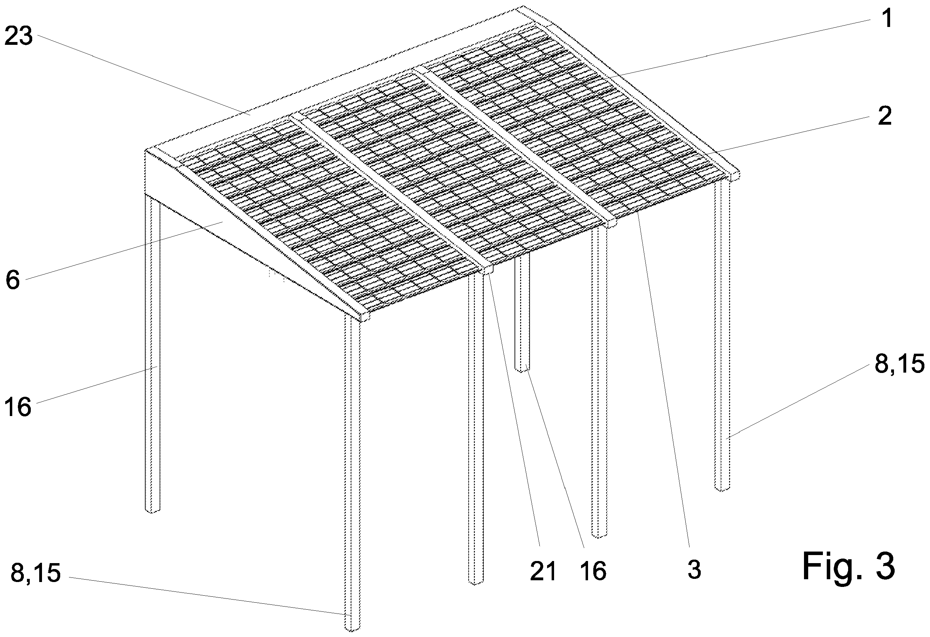

**Fig. 3** zeigt eine einfache aufgeständerte dreiflächige Schindelanordnung 1 ohne Fahrzeug oder Wandfläche 17 in freier Aufstellung. Jede Fläche besteht aus 12 aus- und einzieh- bzw. ausfalt- und einfaltbaren bzw. aufstell- und abbaubaren Streifenrechteckmodulen 2 mit jeweils 6 verschalteten kristallinen sowie Dünnschicht-Solarmodulen 3. Die Streifenrechteckmodule sind in links und rechts in den beiden Längsschienen 6 und zudem in den zwei Zwischenschienen 21 geführt und kontaktiert. Die Schindelanordnung 1 ist hier beispielsweise mittels eines Teleskopstützensystems 15 aufgeständert, welches aus normalen Teleskopstützen 8 und ausfahrbaren Teleskopwandstützen 16 besteht. Es können aber auch starre Stützen verwendet werden. Die Teleskopwandstützen 16 sind bei einer Anordnung an einer Fahrzeug- oder Wandfläche in der Regel nicht erforderlich und können gegebenenfalls wegfallen. Die Längsschienen 6 sind in der Regel ebenfalls teleskopierbar. (zeichnerisch nicht dargestellt). In eingezogenem oder eingefalteten Zustand werden die zwölf Streifenrechteckmodule 2 im Schindelkasten 23 übereinander gelagert, sodass ein minimaler Platzbedarf besteht.

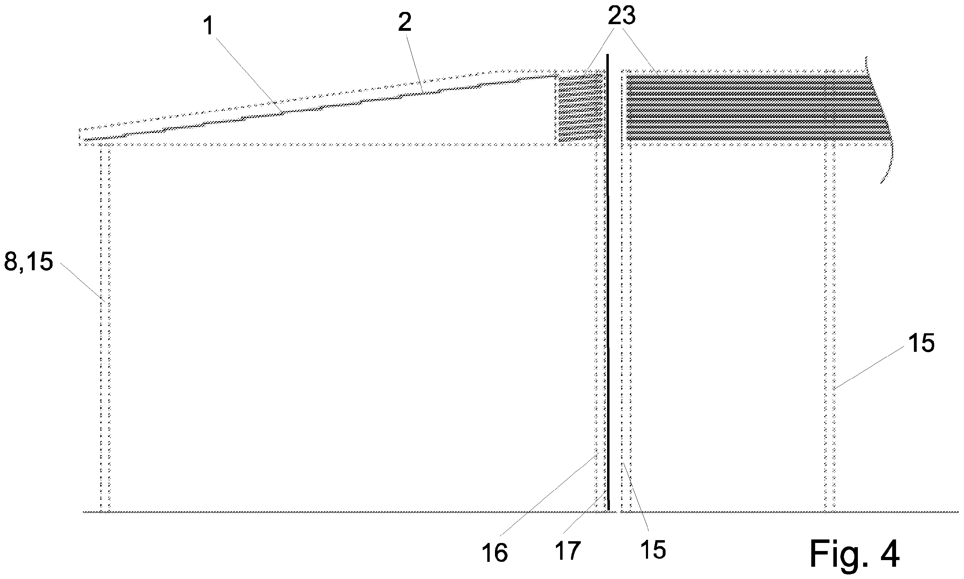

**Fig. 4** zeigt schematisch eine Seitenansicht an einer Wand und eine Vorderansicht mit 12 zu einem Paket zusammenfaltbaren Streifenrechteckmodulen 2 einer erfindungsgemäßen Schindelanordnung 1, welche in einem Schindelkasten 23 gelagert werden können. Die Anzahl der Teleskopstützen 8 des Teleskopstützensystems 15 harmoniert in der Regel mit der Anzahl der teleskopierbaren Längschienen 6 und der Anzahl der jeweils angeordneten Zwischenschienen 21. Bei einflächiger oder zweiflächiger Ausführung reichen in der Regel jeweils vorn zwei Teleskopstützen 8 an den beiden Ecken. Die ausfahrbaren Wandteleskopstützen 16 können, müssen aber nicht angeordnet sein, wenn die Schindeldachanordnung 1 beispielsweise ausreichend fest tragend und statisch sicher in der Fahrzeug- oder Wandfläche 17 verankert ist.

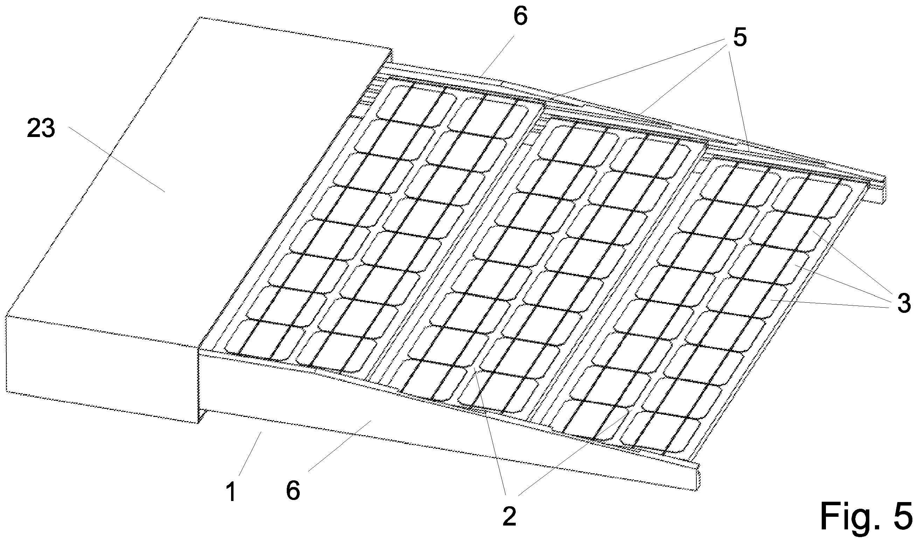

**Fig. 5** zeigt eine einflächige Schindelanordnung 2 mit zwei Reihen von nebeneinander angeordneten und untereinander verschalteten kristallinen sowie Dünnschicht-Solarzellen 3 jeweils auf einem Streifenrechteckmodul 2 während des Ausfahrens. Die hier drei Streifenrechteckmodule 2, welche in ausgefahrenen Zustand sich schindelartig überlappen können, sind innen in den beiden Längsschienen 6 in einem an die Anzahl der Streifenrechteckmodule angepassten Schienensystem 5 geführt und gelagert. Diese sind untereinander geeignet verschalten und mit einem Energiespeicher verbunden.

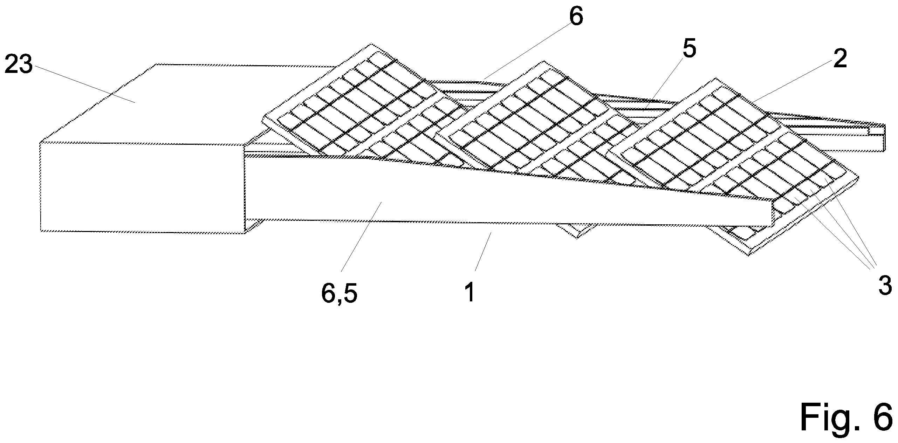

**Fig. 6** zeigt ebenfalls eine einflächige Schindelanordnung 1 mit zwei Reihen von nebeneinander angeordneten und untereinander verschalteten kristallinen sowie Dünnschicht-Solarzellen 3 pro Streifenrechteckmodul in flacher Schrägstellung der Streifenrechteckmodule 2, um einen optimalen Strahlungseinfall zu ermöglichen. Die Schrägstellung erfolgt in der Regel untereinander gekoppelt mittels Kurvenscheiben und einem Seilzuges unter Zuhilfenahme eines speziell ausgebildeten Schienensystems 5 zur Führung der Streifengrechteckmodule 2. Von Vorteil ist es, wenn die Streiferechteckmodule 2 dann weiter auseinander gezogen werden können um die gesamte Fläche (auch die der unteren Reihe) der kristallinen sowie Dünnschicht-Solarzellen 3 nutzen zu können. Das bedeutet, die Längsschienen 6 müssen länger ausgeführt werden, um die Abstände zwischen den Streifenrechteckmodulen gegenüber der Schindelungsstellung weiter vergrößern zu können. Der Schindelkasten 23 ist dann entsprechend breiter auszuführen.

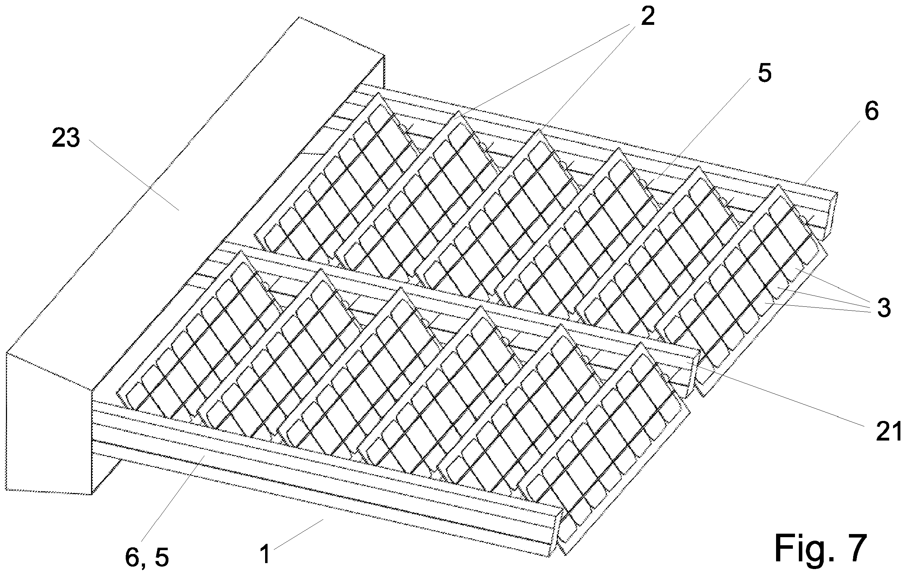

**Fig. 7** zeigt eine zweiflächige Schindelanordnung 1 mit einer Reihe von nebeneinander angeordneten und untereinander verschaltenen kristallinen sowie Dünnschicht-Solarzellen 3 in steiler Schrägstellung der Streifenrechteckmodule 2 um einen optimalen Strahlungseinfall zu ermöglichen. Auch hier sind bevorzugt die beiden teleskopierbaren/aus- und einziehbaren Längsschienen 6 und die teleskopierbare/aus- und einziehbare Zwischenschiene 21 länger ausgebildet um in Schrägstellung mittels des speziell ausgebildeten Schienensystems 5 zu ermöglichen und um optimale Abstände zwischen den Streifenrechteckmodulen 2 zwecks optimaler gleichmäßiger Bestrahlung aller kristallinen sowie Dünnschicht-Solarzellen 3 einstellen zu können. Die beiden Längsschienen 6 und die Mittelschiene 21 bestehen hier bevorzugt aus einem gegeneinander verschiebbaren Doppelschienensystem, die über eine ovale Stellscheibe eingestellt werden können. Das ist auch deswegen von Vorteil, da dadurch die Solarzellen 3 gleichmäßig beschienen werden und eine nahezu gleiche Temperatur besitzen, was temperaturschwankungsbedingte Spannungen innerhalb jeder Reihe von Solarzellen 3 vermeidet. Der Schindelkasten 23 ist nicht allzu breit aber dafür höher ausgeführt, da die Streifenrechteckmodule 2 hier hochkant im Schindelkasten 23 gelagert werden.

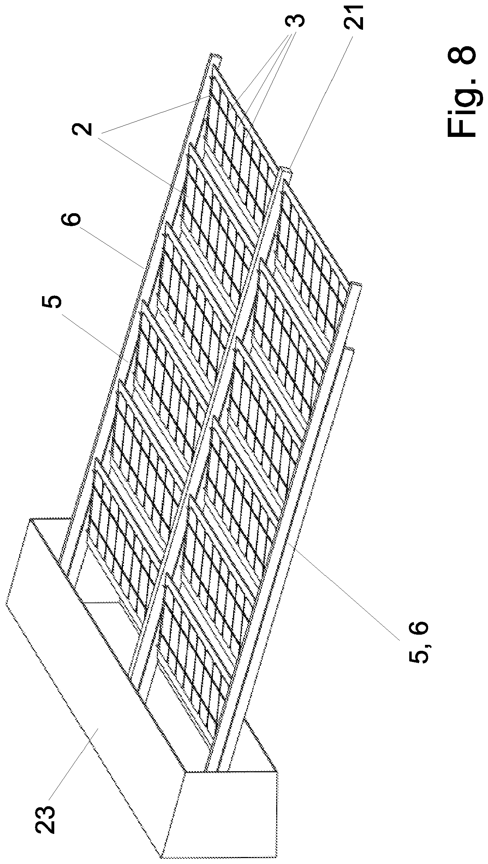

**Fig. 8** zeigt eine zweiflächige Ausführung von um mehr als 90 Grad verstellbaren, d. h. in entgegengesetzte Richtungen aufstellbaren Streifenrechteckmodulen 2 mit jeweils 8 in einer Reihe angeordneten kristallinen sowie Dünnschicht-Solarzellen 3 pro Streifenrechteckmodul 2. Die hier 6 angeordneten Streifenrechteckmodule sind auf ihrer Oberfläche entlang ihrer beiden langen Seiten 19 abwechselnd mit Erhöhungen 10 und mit Vertiefungen 9 versehen. Desgleichen sind auf der Rückseite der Streifenrechteckmodule 2 entlang der langen Seiten 19 abwechselnd Vertiefungen 9 und Erhebungen 10 angeordnet, die mit den Vertiefungen 9 harmonieren, sodass diese in Schindelstellung jeweils ineinandergreifen und für Stabilität sorgen.

Wird weiter auseinandergezogen, können die Streifenrechteckmodule 2 mit ihren aktiven, mit Solarzellen belegten Seiten nach vorn oder nach hinten, je nach Sonnenstand aufgestellt und ausgerichtet werden. Es ist auch noch sinnvoll, die beiden geteilten Längsschienen 6 und die geteilte Mittelschiene 21 innerhalb eines bestimmten Winkelbereiches nach unten oder nach oben schwenkbar auszubilden. Dadurch wird es möglich, die Schindelung nach vom vom Befestigungspunkt des Schindelkastens 23 weg schräg einzustellen. Dann läuft der Regen vom Schindelkasten 23 weg nach vorn ab. Andererseits kann die Schindelung in die andere Richtung ebenso eingerichtet werden. Dann ist die Schrägstellung nach hinten in Richtung des Schindelkastens geneigt. Damit wird Regen nach hinten zum Schindelkasten hin abgeleitet. Diese Ausführung ist nur für bestimmte Anordnungen sinnvoll, wie beispielsweise beim Anbau an Fahrzeuge oder Balkone. Damit dies möglich ist, sind die beiden Längsschienen 6 und die Mittelschiene 21 geteilt ausgeführt und so weit ausziehbar, dass die Streifenrechteckmodule 2 bis über die Schindelstellung hinaus auseinandergezogen und in die gewünschte Richtung und Stellung aufgestellt werden können. Je nach Sonnenstand können die Streifenrechteckmodule 2 auch steiler (offene nicht regendichte Stellung) nach vorn vom Schindelkasten 23 weg oder zum Schindelkasten 23 hin aufgestellt werden. Das Schienensystem 5 ist dabei so gestaltet, dass dies entsprechend möglich ist. Es ist aber auch die Variante ausführbar, bei der die Schindelung nur nach einer Richtung einstellbar ist aber optimale Schrägstellung - je nach Sonnenstand - in beide Richtungen möglich ist. Die geteilten Schienen 11.1 und 11.2 werden beispielsweise über einen ovalen Drehscheibenmechanismus ausgefahren und verstellt, um eine optimale Neigung zur Sonneneinstrahlung einzustellen.

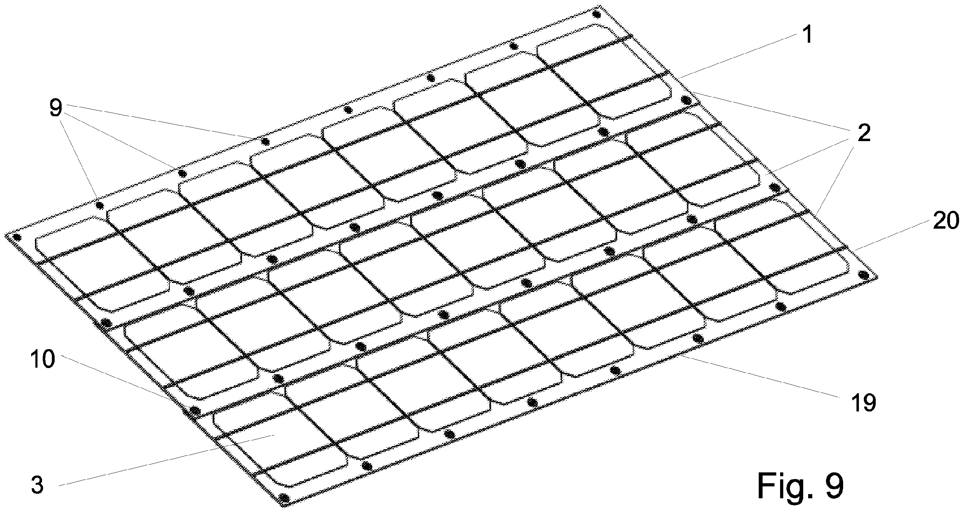

**Fig. 9** zeigt eine ganz einfache manuell zusammenbaubare Ausführung aus drei Streifenrechteckmodulen 2, ohne einen Rahmen und ohne ein Gestell, zum Aufstellen oder Ausrichtenden und ohne jeglichen weiteren Zubehör. Dieser Baukasten, zu dem dann mindestens zwei seitliche Längsschienen 2 und eine Aufhängevorrichtung oder eine Aufstelleinrichtung mit Sammelschienen oder einem Anschlusskabel zur Stromableitung und eine Energiespeichereinheit gehören, ist leicht transportierbar leicht montier- oder aufstellbar und bedarf nur einem sehr geringen Platzbedarf beim Transport.

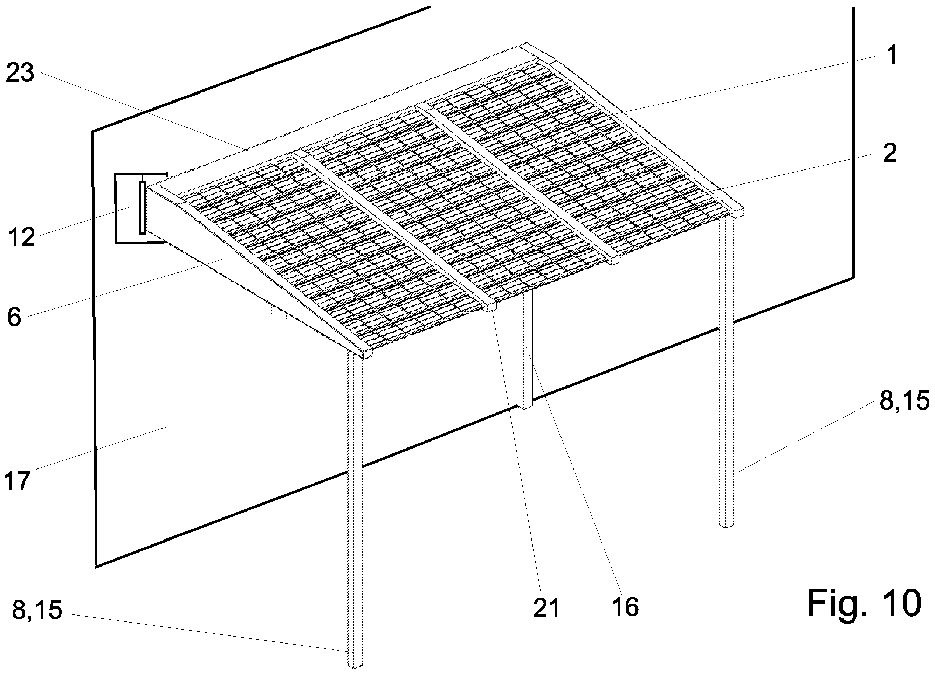

**Fig. 10** zeigt eine aufgeständerte dreiflächige Schindelanordnung 1, montiert an eine Wandfläche 17 mit einer einfachen Gelenkkonstruktion 12 (hier mit einer einfachen Scharnierausführung zum Verschwenken um bis zu 90 Grad nach links. Dabei ist es möglich, mit sehr wenig Aufwand die Schindelanordnung je nach Sonnenstand auszurichten und wenigstens teilweise dem wechselnden Sonnenstand des Tages folgen zu können. Die zwei Teleskopstützen 8 und die Wandteleskopstütze 16 des Teleskopstützensystems 15 können bei Bedarf unten mit Rollen versehen sein, damit das seitliche Verschwenken mit wenig Kraft von Hand erfolgen kann. Das Teleskopstützensystem 16 oder starre Stützensystem kann abmontierbar ausgeführt sein, damit die Streifenrechteckmodule 2 eingezogen und im Schindelkasten 23 zusammen und übereinandergelegt verstaut werden können. Die Verschaltung der Streifenrechteckmodule 2 erfolgt beispielsweise über flexible Steckverbindungen und -leitungen oder über eine seitliche Verschaltung. Die Längsschienen ermöglichen eine ausreichende mechanische Stabilität.

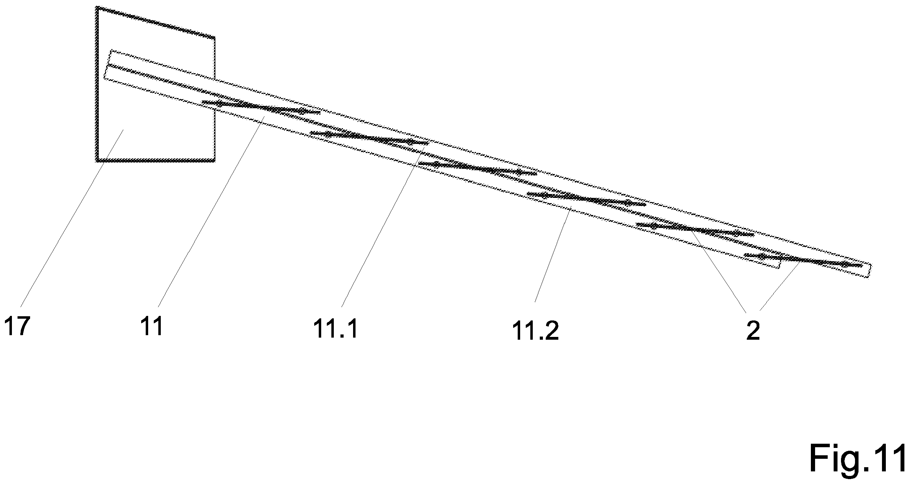

**Fig. 11** zeigt schematisch eine bevorzugtes einfache Doppelschiene 11 zum Aufstellen, d. h. Schrägstellen von an der Doppelschiene 11 in Drehpunkten befestigten sechs Streifenrechteckmodulen 2. Jedes Streifenrechteckmodul 2 ist sowohl an der oberen Schiene 11.1 als auch an der unteren Schiene 11.2 in mindestens einem Drehpunkt geführt. Wird die untere Schiene 11.1 gegenüber der Oberen Schiene 11.2 nach vorn von der Fahrzeug- oder Wandfläche 17 weg bewegt, werden die Streifenrechteckmodule 2 nach oben aufgestellt und der Einstrahlungswinkel bezüglich der einfallenden Sonnenstrahlen kann optimiert werden Die Bewegung der unteren Schiene 11.2 gegenüber der oberen Schiene 11.1 erfolgt über eine geeignete Mechanik. Das ist beispielsweise über links und rechts angeordnete Kurvenscheiben, welche mittels eins Seilzuges oder auch motorisch angetrieben werden können, möglich. Auch können die Drehpunkte in der oberen und unteren Schiene 11.1 und 11.2 in gesonderten Schlitzen in den Doppelschienen 11 verschieblich angeordnet sein. Es ist auch möglich, dass die Streifenrechteckmodule 2 über zwischengeordnete zusätzliche gebogene Hebelarme mit den Doppelschienen verbunden sind um das schindelartige Aufeinanderliegen der Streifenrechteckmodule einstellen zu können. Die Streifenrechteckmodule 2 können auch leicht gewölbt ausgeführt sein, so dass die Schindelauflage durch diese Wölbung erreicht wird. Das Doppelschienensystem aus beispielsweise zwei symmetrischen ausgebildeten Doppelschienen 11 ist bei eingefahrenen Streifenrechteckmodulen an die Fahrzeug- oder Wandfläche 17 anklappbar oder wahlweise auch abnehmbar ausgebildet. Im Ergebnis entsteht eine geschlossene Schindelanordnung mit von in Reihe oder parallel geschalteten kristallinen sowie Dünnschicht-Solarzellen in der Art eines Vordaches, welche leicht installierbar, bequem ausfahrbar, einfach transportierbar oder anordenbar ausgebildet ist.

### Bezugszeichenliste

- 1: Schindelanordnung
- 2: Streifenrechteckmodul
- 3: Dünnschicht-Solarzelle
- 4: Schleifkontakt
- 5: Schienensystem
- 6: Längsschiene/Teleskopierbar
- 7: Frontschiene
- 8: Teleskopstütze
- 9: Vertiefungen oder durchgehende Öffnungen
- 10: Erhebungen, Kugeln oder Stifte
- 11: Doppelschiene
- 11.1: Obere Schiene
- 11.2: Untere Schiene
- 12: Gelenkkonstruktion
- 15: Teleskopstützensystem
- 16: ausfahrbare Wandteleskopstütze
- 17: Fahrzeug- oder Wandfläche
- 18: Außenkante
- 19: lange Seite
- 20: kurze Seite
- 21: Zwischenschiene
- 22: Fahrzeug
- 23: Schindelkasten

## Patentansprüche

1. Verfahrbare Schindelanordnung (1) aus Streifenrechteckmodulen (2) mit einer Belegung von kristallinen sowie Dünnschicht-Solarzellen (3) auf wahlweise verschiedenen Trägermaterialien, wobei entlang von mindestens zwei Außenkanten (18) unter den Streifenrechteckmodulen (2) Stützstrukturen zum Halten und Verschieben in einem darunter angeordneten ausfahrbaren oder ausklappbaren Schienensystem (5) angeordnet sind, wobei
eine Reihe, oder zwei Reihen oder mehrere Reihen von nebeneinander angeordneten kristallinen sowie Dünnschicht-Solarzellen (3) untereinander verschalteten in einem Streifenrechteckmodul (2) angeordnet sind,
dass zwei oder mehrere Streifenrechteckmodule (2) sich im ausgefahrenen Zustand schindelartig überlappen,
**dadurch gekennzeichnet,**
**dass** an jedem Streifenrechteckmodul (2) außen an der kurzen Seite Kontakte (11) ausgebildet sind,
die Kontakte (11) an der kurzen Seite direkt seitlich im oder auf dem Streifenrechteckmodul (2) oder im Schienensystem (5) angeordnet sind,
wobei jedes Streifenrechteckmodul (2) einzeln kontaktiert und verschaltet ist,
**dass** entlang einer langen Seite (19) des Streifenrechteckmoduls (2) eine definierte Lochstruktur aus Vertiefungen oder durchgehenden Öffnungen (9) angeordnet ist,
**dass** in die Öffnungen (9) der Lochstruktur Erhebungen oder Stifte (10) eines nächsten angeordneten Streifenrechteckmoduls (2), insbesondere Noppen oder Spikes, eingreifen und
**dass** die Streifenrechteckmodule (2) untereinander über einen Seilzug (14) oder ein Schienesystem (15) oder über einen Gelenkarm gekoppelt sind und
**dass** mittels des Seilzuges (14) oder über ein Schienensystem (15) oder über einen Gelenkarm die Streifenrechteckmodule (2) aus- und einziehbar oder aus- oder einfahrbar und/oder aufstellbar und ausrichtbar ausgebildet sind.

2. Verfahrbare Schindelanordnung (1) aus Streifenrechteckmodulen (2) mit einer Belegung von kristallinen sowie Dünnschicht-Solarzellen (3) nach Anspruch 1,
**dadurch gekennzeichnet,**
**dass** die Schindelanordnung (1) aus Streifenrecheckmodulen (2) als einflächiges, zweiflächiges oder mehrflächiges Schindeldach ausgebildet ist und über Zwischenschienen (21) verbunden ist.

3. Verfahrbare Schindelanordnung (1) aus Streifenrechteckmodulen (2) mit einer Belegung von kristallinen sowie Dünnschicht-Solarzellen (3) nach Anspruch 1 oder 2,
**dadurch gekennzeichnet,**
**dass** die Schindelanordnung (1) in Abhängigkeit vom Winkel der Sonneneinstrahlung von Hand oder automatisch über eine Stützteleskopkonstruktion aufstellbar und ausrichtbar ist.

4. Verfahrbare Schindelanordnung (1) aus Streifenrechteckmodulen (2) mit einer Belegung von kristallinen sowie Dünnschicht-Solarzellen (3) nach Anspruch 1 oder 2,
**dadurch gekennzeichnet,**
**dass** die Schindelanordnung (1) als gesamtes mehrflächiges Schindeldach in Abhängigkeit vom Winkel der Sonneneinstrahlung von Hand oder automatisch aufstellbar ist.

5. Verfahrbare Schindelanordnung (1) aus Streifenrechteckmodulen (2) mit einer Belegung von kristallinen sowie Dünnschicht-Solarzellen (3) nach Anspruch 1 bis 4,
**dadurch gekennzeichnet,**
**dass** nur jedes zweite Streifenrechteckmodul (2) oder die Streifenrechteckmodule (2) nur teilweise mit kristallinen sowie Dünnschicht-Solarzellen (3) bestückt sind.

6. Verfahrbare Schindelanordnung (1) aus Streifenrechteckmodulen (2) mit einer Belegung von kristallinen sowie Dünnschicht-Solarzellen (3) nach Anspruch 1 bis 5,
**dadurch gekennzeichnet,**
**dass** die Schindelanordnung (1) sensorgesteuert, d. h. mit mindestens einem Regensensor und mindestens einem Windsensor zur Überwachung ausgebildet ist.

7. Verfahrbare Schindelanordnung (1) aus Streifenrechteckmodulen (2) mit einer Belegung von kristallinen sowie Dünnschicht-Solarzellen (3) nach einem der vorstehenden Ansprüche,
**dadurch gekennzeichnet,**
**dass** unter der Schindeldachanordnung (1) eine Beleuchtung angeordnet ist.

8. Verfahrbare Schindelanordnung (1) aus Streifenrechteckmodulen (2) mit einer Belegung von kristallinen sowie Dünnschicht-Solarzellen (3) nach Anspruch 1 oder 2,
**dadurch gekennzeichnet,**
**dass** bei Anordnung an Fahrzeugen die auszieh- bzw. ausfahrbare Schindelanordnung (1) beidseitig oder dreiseitig angeordnet ist.

9. Verfahrbare Schindelanordnung (1) aus Streifenrechteckmodulen (2) mit einer Belegung von kristallinen sowie Dünnschicht-Solarzellen (3) nach einem der vorstehenden Ansprüche,
**dadurch gekennzeichnet,**
**dass** die Schindelanordnung (1) aus Streifenrecheckmodulen (2) nur einseitig mit einer Gelenkkonstruktion (12) fest arretierbar angeordnet ist, sodass sie jeweils um die Gelenkkonstruktion (12) unter Einbeziehung der Stützkonstruktion um einen Winkel bis zu 90° schwenkbar ausgebildet ist.

10. Verfahrbare Schindelanordnung (1) aus Streifenrechteckmodulen (2) mit einer Belegung von kristallinen sowie Dünnschicht-Solarzellen (3) nach einem der vorstehenden Ansprüche,
**dadurch gekennzeichnet,**
**dass** jedes Streifenrechteckmodul (2) mit einer Bypass-Diode (13) einzeln verschaltet ist.

11. Verfahrbare Schindelanordnung (1) aus Streifenrechteckmodulen (2) mit einer Belegung von kristallinen sowie Dünnschicht-Solarzellen (3) nach einem der vorstehenden Ansprüche,
**dadurch gekennzeichnet,**
**dass** die Kontaktierung der Streiferechteckmodule (1) über in den Längsschienen angeordnete Federkontakte, über in den Längsschienen angeordnete Pinkontakte oder über Schleifkontakte oder über angeordnet einzelne Steckverbindungen erfolgt.

12. Verfahrbare Schindelanordnung (1) aus Streifenrechteckmodulen (2) mit einer Belegung von kristallinen sowie Dünnschicht-Solarzellen (3) nach einem der vorstehenden Ansprüche,
**dadurch gekennzeichnet,**
**dass** das an oder unter den seitlichen Außenkanten (18) und an den Teleskopstützen (8) an der Stützkonstruktion diese umhüllend zusätzlichen Zeltplanen zum seitlichen Witterungsschutz angeordnet sind.

13. Zusammensteckbare Schindelanordnung (1) aus Streifenrechteckmodulen (2) mit einer Belegung von kristallinen sowie Dünnschicht-Solarzellen (3) auf wahlweise verschiedenen Trägermaterialien, wobei entlang von mindestens zwei Außenkanten (18) unter den Streifenrechteckmodulen (2) Stützstrukturen zum Halten und Verschieben in einem darunter angeordneten ausfahrbaren oder ausklappbaren Schienensystem (5) angeordnet sind, wobei
eine Reihe von untereinander verschalteten kristallinen sowie Dünnschicht-Solarzellen (3) nebeneinander in einem Streifenrechteckmodul (2) angeordnet sind,
dass zwei oder mehrere Streifenrechteckmodule (2) sich im ausgefahrenen Zustand schindelartig überlappen,
**dadurch gekennzeichnet,**
**dass** an jedem Streifenrechteckmodul (2) außen an der kurzen Seite (20) Kontakte (11) ausgebildet sind,
die Kontakte (11) an der kurzen Seite (20) direkt seitlich im oder auf dem Streifenrechteckmodul (2) oder im Schienensystem (5) angeordnet sind,
wobei jedes Streifenrechteckmodul (2) einzeln kontaktiert und verschaltet ist,
**dass** entlang einer langen Seite (19) des Streifenrechteckmoduls (2) eine definierte Lochstruktur aus Vertiefungen oder durchgehenden Öffnungen (9) angeordnet ist,
**dass** in die Vertiefungen oder Öffnungen (9) der Lochstruktur Erhebungen oder Stifte (10) eines nächsten angeordneten Streifenrechteckmoduls (2), insbesondere Noppen oder Spikes oder Druckknopfverbindungen, eingreifen und
**dass** die Streifenrechteckmodule (2) untereinander manuell über die Vertiefungen oder durchgehenden Öffnungen (9) und die korrespondierenden Erhebungen oder Stifte (10) untereinander zu einem Schindeldach zusammengesteckt werden,
wobei die einzelnen Streifenrechteckmodule (2) ein geschlossenes Schindeldach bilden und die Streifenrechteckmodule (2) über gesonderte flexible Kupferverbinder über eine oder zwei seitlich angeordnete Sammelschienen verbunden sind und mit einer Energiesammeleinheit oder angeschlossenen Verbrauchern über eine elektrische Schaltzentrale verbunden sind.

## Claims

1. A movable shingle array (1) of rectangular strip modules (2) fitted with crystalline and thin-film solar cells (3) on optionally different carrier materials, wherein support structures for holding and moving in an extendable or fold-out rail system (5) are arranged under the rectangular strip modules (2) along at least two outer edges (18), wherein
one row or two rows or multiple rows of crystalline and thin-film solar cells (3) arranged next to each other are arranged interconnected in a rectangular strip module (2),
two or more rectangular strip modules (2) overlap each other in the manner of shingles when they are extended,
**characterized in that**
contacts (11) are formed on the outside of the short side of each rectangular strip module (2), the contacts (11) are arranged on the short side directly laterally in or on the rectangular strip module (2) or in the rail system (5), wherein each rectangular strip module (2) is individually contacted and connected,
a defined hole structure consisting of depressions or through openings (9) is arranged along a long side (19) of the rectangular strip module (2),
elevations or pins (10)), specifically studs or spikes, of a next arranged rectangular strip module (2) engage in the openings (9) of the hole structure, and
the rectangular strip modules (2) are coupled to one another via a cable pull (14) or a rail system (15) or via an articulated arm, and
the rectangular strip modules (2) are designed to be extendable or retractable and/or erectable and adjustable by means of the cable pull (14) or a rail system (15) or an articulated arm.

2. The movable shingle array (1) of rectangular strip modules (2) fitted with crystalline and thin-film solar cells (3) according to claim 1,
**characterized in that**
the shingle array (1) of rectangular strip modules (2) is designed as a single, double, or multi-surface shingle roof and is connected via intermediate rails (21).

3. The movable shingle array (1) of rectangular strip modules (2) fitted with crystalline and thin-film solar cells (3) according to claim 1 or 2,
**characterized in that**
the shingle array (1) can be set up and aligned manually or automatically via a telescopic support structure as a function of the angle of the solar radiation.

4. The movable shingle array (1) of rectangular strip modules (2) fitted with crystalline and thin-film solar cells (3) according to claim 1 or 2,
**characterized in that**
the shingle array (1) can be set up manually or automatically as an entire multi-surface shingle roof as a function of the angle of the solar radiation.

5. The movable shingle array (1) of rectangular strip modules (2) fitted with crystalline and thin-film solar cells (3) according to claims 1 to 4,
**characterized in that**
only every second rectangular strip module (2) is equipped or the rectangular strip modules (2) are only partially equipped with crystalline and thin film solar cells (3).

6. The movable shingle array (1) of rectangular strip modules (2) fitted with crystalline and thin-film solar cells (3) according to claims 1 to 5,
**characterized in that**
the shingle array (1) is sensor-controlled, i.e. designed with at least one rain sensor and at least one wind sensor for monitoring.

7. The movable shingle array (1) of rectangular strip modules (2) fitted with crystalline and thin-film solar cells (3) according to any of the above claims,
**characterized in that**
lighting is arranged under the shingle roof array (1).

8. The movable shingle array (1) of rectangular strip modules (2) fitted with crystalline and thin-film solar cells (3) according to claim 1 or 2,
**characterized in that**
when arranged on vehicles, the pull-out or extendable shingle array (1) is arranged on both sides or on three sides.

9. The movable shingle array (1) of rectangular strip modules (2) fitted with crystalline and thin-film solar cells (3) according to any of the above claims,
**characterized in that**
the shingle array (1) of rectangular strip modules (2) is arranged in a fixedly lockable manner on only one side by means of a hinge construction (12), so that it is designed in each case to be pivotable through an angle of up to 90° about the hinge construction (12), including the supporting construction.

10. The movable shingle array (1) of rectangular strip modules (2) fitted with crystalline and thin-film solar cells (3) according to any of the above claims,
**characterized in that**
each rectangular strip module (2) is individually connected to a bypass diode (13).

11. The movable shingle array (1) of rectangular strip modules (2) fitted with crystalline and thin-film solar cells (3) according to any of the above claims,
**characterized in that**
the contacting of the rectangular strip modules (2) takes place via spring contacts arranged in the longitudinal rails, via pin contacts arranged in the longitudinal rails or via sliding contacts or via arranged individual plug connections.

12. The movable shingle array (1) of rectangular strip modules (2) fitted with crystalline and thin-film solar cells (3) according to any of the above claims,
**characterized in that**
on or under the lateral outer edges (18) and on the telescopic supports (8) on the supporting construction, additional tent tarpaulins are arranged to enclose these for lateral weather protection.

13. Interlocking shingle array (1) of rectangular strip modules (2) fitted with crystalline and thin-film solar cells (3) on optionally different carrier materials, wherein support structures for holding and moving in an extendable or fold-out rail system (5) are arranged under the rectangular strip modules (2) along at least two outer edges (18),
wherein
a number of interconnected crystalline and thin-film solar cells (3) are arranged next to each other in a rectangular strip module (2),
two or more rectangular strip modules (2) overlap each other in the manner of shingles when they are extended,
**characterized in that**
contacts (11) are formed on the outside of the short side (20) of each rectangular strip module (2),
the contacts (11) are arranged on the short side (20) directly laterally in or on the rectangular strip module (2) or in the rail system (5), wherein each rectangular strip module (2) is individually contacted and connected,
a defined hole structure consisting of depressions or through openings (9) is arranged along a long side (19) of the rectangular strip module (2),
elevations or pins (10), specifically studs or spikes or snap fastener connections, of a next arranged rectangular strip module (2) engage in the depressions or openings (9) of the hole structure and
the rectangular strip modules (2) are manually interconnected with one another via the depressions or through-openings (9) and the corresponding elevations or pins (10) to form a shingle roof,
wherein the individual rectangular strip modules (2) form a closed shingle roof and the rectangular strip modules (2) are connected via separate flexible copper connectors via one or two laterally arranged bus bars and are connected to an energy collection unit or connected consumers via an electrical switching centre.

## Revendications

1. Assemblage en bardeaux (1) mobile constitué de modules de bandes rectangulaires (2) équipés de cellules photovoltaïques (3) cristallines et à couche mince sur des substrats optionnellement différents, dans lequel des structures de support sont disposées au-dessous des modules de bandes rectangulaires (2) dans un système de rails (5) extensible ou dépliable le long d'au moins deux bords extérieurs (18), dans lequel
une rangée ou deux rangées ou plusieurs rangées de cellules photovoltaïques (3) cristallines et à couche mince juxtaposées sont disposées dans un module de bandes rectangulaires (2) et connectées entre elles,
à l'état déployé, deux ou plusieurs modules de bandes rectangulaires (2) se recouvrent à la manière de bardeaux,
**caractérisé en ce que**
des contacts (11) sont réalisés sur chaque module de bandes rectangulaires (2) à l'extérieur sur le côté court,
les contacts (11) sur le côté court sont disposés directement sur le côté dans ou sur le module de bandes rectangulaires (2) ou dans le système de rails (5), chaque module de bandes rectangulaires (2) étant mis en contact et relié individuellement,
une structure percée définie de dépressions ou d'ouvertures traversantes (9) est disposée le long d'un côté long (19) du module de bandes rectangulaires (2),
des élévations ou des broches (10), plus particulièrement des pointes ou des picots, d'un module de bandes rectangulaires (2) adjacent s'engagent dans les ouvertures (9) de la structure percée, les modules de bandes rectangulaires (2) sont couplés les uns aux autres par un câble de traction (14) ou un système de rails (15) ou par un bras articulé et
les modules de bandes rectangulaires (2) sont réalisés de manière à être déployés et rétractés, étendus et contractés et/ou dressés et orientés au moyen du câble de traction (14) ou d'un système de rails (15) ou d'un bras articulé.

2. Assemblage en bardeaux (1) mobile constitué de modules de bandes rectangulaires (2) équipés de cellules photovoltaïques (3) cristallines et à couche mince selon la revendication 1, **caractérisé en ce que**
l'assemblage en bardeaux (1) mobile constitué de modules de bandes rectangulaires (2) est configuré comme un toit en bardeaux et relié par des rails intermédiaires (21).

3. Assemblage en bardeaux (1) mobile constitué de modules de bandes rectangulaires (2) équipés de cellules photovoltaïques (3) cristallines et à couche mince selon la revendication 1 ou 2,
**caractérisé en ce que**
l'assemblage en bardeaux (1) peut être dressé et orienté en fonction de l'angle du rayonnement solaire, soit à la main, soit automatiquement au moyen d'une structure de support télescopique.

4. Assemblage en bardeaux (1) mobile constitué de modules de bandes rectangulaires (2) équipés de cellules photovoltaïques (3) cristallines et à couche mince selon la revendication 1 ou 2,
**caractérisé en ce que**
l'assemblage en bardeaux (1) peut être dressé en forme de toit en bardeaux multi-pans en fonction de l'angle du rayonnement solaire, soit à la main, soit automatiquement.

5. Assemblage en bardeaux (1) mobile constitué de modules de bandes rectangulaires (2) équipés de cellules photovoltaïques (3) cristallines et à couche mince selon les revendications 1 à 4,
**caractérisé en ce que**
seulement un module de bandes rectangulaires (2) sur deux ou seulement une partie des modules de bandes rectangulaires (2) est équipé de cellules photovoltaïques (3) cristallines et à couche mince.

6. Assemblage en bardeaux (1) mobile constitué de modules de bandes rectangulaires (2) équipés de cellules photovoltaïques (3) cristallines et à couche mince selon les revendications 1 à 5,
**caractérisé en ce que**
l'assemblage en bardeaux (1) est commandé par capteurs, à savoir par au moins un capteur de pluie et au moins un capteur de vent pour la surveillance.

7. Assemblage en bardeaux (1) mobile constitué de modules de bandes rectangulaires (2) équipés de cellules photovoltaïques (3) cristallines et à couche mince selon une des revendications précédentes,
**caractérisé en ce que**
sous l'assemblage de toit en bardeaux (1) est disposé un éclairage.

8. Assemblage en bardeaux (1) mobile constitué de modules de bandes rectangulaires (2) équipés de cellules photovoltaïques (3) cristallines et à couche mince selon la revendication 1 ou 2,
**caractérisé en ce que**
monté sur des véhicules, l'assemblage en bardeaux (1) déployable ou extensible est disposé sur deux ou trois côtés.

9. Assemblage en bardeaux (1) mobile constitué de modules de bandes rectangulaires (2) équipés de cellules photovoltaïques (3) cristallines et à couche mince selon une des revendications précédentes,
**caractérisé en ce que**
l'assemblage en bardeaux (1) constitué de modules de bandes rectangulaires (2) est disposé de façon à pouvoir être bloqué sur un seul côté de manière fixe au moyen d'une construction articulée (12) de manière à ce qu'il soit pivotable selon un angle allant jusqu'à 90° autour de la construction articulée (12) en association avec la structure de support.

10. Assemblage en bardeaux (1) mobile constitué de modules de bandes rectangulaires (2) équipés de cellules photovoltaïques (3) cristallines et à couche mince selon une des revendications précédentes,
**caractérisé en ce que**
chaque module de bandes rectangulaires (2) est relié individuellement à une diode (13) en parallèle.

11. Assemblage en bardeaux (1) mobile constitué de modules de bandes rectangulaires (2) équipés de cellules photovoltaïques (3) cristallines et à couche mince selon une des revendications précédentes,
**caractérisé en ce que**
la mise en contact des modules de bandes rectangulaires (2) est réalisée au moyen de contacts à ressort disposés dans les rails longitudinaux, de contacts à broche disposés dans les rails longitudinaux ou de contacts coulissants ou de connecteurs disposés individuellement.

12. Assemblage en bardeaux (1) mobile constitué de modules de bandes rectangulaires (2) équipés de cellules photovoltaïques (3) cristallines et à couche mince selon une des revendications précédentes,
**caractérisé en ce que**
sur ou sous les bords extérieurs (18) latéraux et sur les supports télescopiques (8) de la structure de support, des bâches additionnelles enveloppant ces derniers sont disposées afin de servir de protection latérale contre les intempéries.

13. Assemblage en bardeaux (1) emboîtable constitué de modules de bandes rectangulaires (2) équipés de cellules photovoltaïques (3) cristallines et à couche mince sur des substrats optionnellement différents, dans lequel des structures de support sont disposées pour la tenue et le déplacement au-dessous des modules de bandes rectangulaires (2) dans un système de rails (5) extensible ou dépliable le long d'au moins deux bords extérieurs (18),
dans lequel
une rangée de cellules photovoltaïques (3) cristallines et à couche mince sont disposées en juxtaposition dans un module de bandes rectangulaires (2) et reliées entre elles,
à l'état déployé, deux ou plusieurs modules de bandes rectangulaires (2) se recouvrant à la manière de bardeaux,
**caractérisé en ce que**
des contacts (11) sont réalisés sur le côté court (20) à l'extérieur de chaque module de bandes rectangulaires (2),
les contacts (11) sur le côté court (20) sont disposés directement sur le côté, soit dans ou sur le module de bandes rectangulaires (2) ou dans le système de rails (5),
chaque module de bandes rectangulaires (2) étant mis en contact et relié individuellement, une structure percée définie de dépressions ou d'ouvertures traversantes (9) est disposée le long d'un côté long (19) du module de bandes rectangulaires (2),
des élévations ou des broches (10), plus particulièrement des pointes ou des picots ou des liaisons à bouton-poussoir, d'un module de bandes rectangulaires (2) adjacent s'engagent dans les dépressions ou les ouvertures (9) de la structure percée et
les modules de bandes rectangulaires (2) sont emboités manuellement les uns aux autres par les dépressions ou les ouvertures traversantes (9) et les élévations et les broches (10) correspondantes pour former un toit en bardeaux,
les modules de bandes rectangulaires (2) individuels formant un toit en bardeaux clos et les modules de bandes rectangulaires (2) étant reliés par des raccords en cuivre flexibles spécifiques via une ou deux barres omnibus disposées latéralement et reliés à un accumulateur d'énergie ou à des unités de consommation connectées via un centre de commande électrique.
